(19) **Europäisches Patentamt / European Patent Office / Office européen des brevets**

(11) **EP 1 420 385 B1**

(12) **EUROPEAN PATENT SPECIFICATION**

(45) Date of publication and mention
of the grant of the patent:
**16.01.2013 Bulletin 2013/03**

(51) Int Cl.:
**G09G 3/36** <sup>(2006.01)</sup>

(21) Application number: **03026083.0**

(22) Date of filing: **12.11.2003**

(54) **Liquid crystal display**

Flüssigkristallanzeige

Afficheur à cristal liquide

(84) Designated Contracting States:
**DE FR GB**

(30) Priority: **12.11.2002 KR 2002070050**

(43) Date of publication of application:
**19.05.2004 Bulletin 2004/21**

(73) Proprietor: **Samsung Display Co., Ltd.
Yongin-City, Gyeonggi-Do (KR)**

(72) Inventors:
• **Lee, Seung-Woo**
Seoul (KR)
• **Yu Yun-ju**
Seoul (KR)
• **Park, Doo-Sik**
Suwon-city,
Kyungki-do (KR)
• **Kim, Jong-Seon**
Pyeongtaek-city,
Kyungki-do (KR)
• **Choh, Heui-Keun**
Seoul (KR)

• **Kim, Chang-Yeong**
Yongin-city,
Kyungki-do (KR)

(74) Representative: **Modiano, Micaela Nadia
Modiano Josif Pisanty & Staub Ltd
Thierschstrasse 11
80538 München (DE)**

(56) References cited:
**US-A1- 2001 055 007      US-A1- 2002 130 830
US-A1- 2002 154 088      US-B1- 6 278 496**

• **GAURAV SHARMA: "LCDs Versus CRTs-Color-Calibration and Gamut Considerations" PROCEEDINGS OF THE IEEE, IEEE. NEW YORK, US, vol. 90, no. 4, April 2002 (2002-04), XP011064994 ISSN: 0018-9219**
• **HIROAKI SUGIURA ET AL: "P-24: LCD Module Adopting a Color Conversion Circuit", 2002 SID INTERNATIONAL SYMPOSIUM - MAY 21, 2002, HYNES CONVENTION CENTER, BOSTON, MASSACHUSETTS, vol. XXXIII, 21 May 2002 (2002-05-21), page 288, XP007008121,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

**(a) Field of the Invention .**

The present invention relates to a liquid crystal display and a driving method thereof.

**(b) Description of the Related Art**

Recently, in the field of a display device such as a personal computer and a television, it is required that the display device should involve a light weight, a thin thickness and a large screen size. In order to fulfill such requirements, a flat panel display such as a liquid crystal display (LCD) has been developed instead of the cathode ray tube, and applied for practical use in the field of computers, and televisions.

The LCD has a panel with a matrix-typed pixel pattern, and a counter panel facing the former panel. A liquid crystal material bearing a dielectric anisotropy is injected between the two panels. The light transmission through the panels is controlled through varying the strength of the electric fields applied to both ends of the two panels, thereby displaying the desired images.

The display device usually represents original images on the screen by way of the RGB color space intrinsic thereto. That is, when the color space is expressed by way of a plurality of gray levels, gamma correction is made by way of a luminance curve corresponding to each gray level, that is, by way of a gamma curve. A color correction is additionally made, thereby recovering the original images. However, as the RGB color space is mostly device-dependent, the designer of the display device as well as the user thereof should consider the image profile intrinsic to the device when the original images are represented. This is a considerable burden to them. As the kind and the characteristic of the display device are diversified in various manners, it is needed to make a definition of a standard color space for the display device. In this connection, a sRGB color space being the unit standard RGB color space as the average concept of the RGB monitors was proposed on November, 1996 by the HP Company and the MS Company. Since then, the sRGB color space has been accepted as a standard color space on Internet

US2002/130830 discloses an LCD comprising an inverter for a backlight unit and and a timing controller for receiving image signals and timing signals from the outside, converting them into signals for outputs of the image signals and scan signals, respectively outputting them to the data driver and the scan driver, checking the image signals, and when the image signals are found to be moving pictures, outputting a high or a low voltage to the inverter according to whether the image signals require high or low luminance level driving so as to increase or decrease luminance levels of the LCD panel, and when the image signals are found to be still images, outputting a control signal of outputs of a predetermined luminance level.

US2002/154088 discloses a method for displaying an image, comprising a step of displaying an image signal or a non-image signal by switching between the image signal and the non-image signal, based on a result from detection of a motion of an image, and by applying the image signal or the non-image signal to data electrodes making up the liquid crystal display.

"LCD Module Adopting a Color Conversion Circuit" by Sugiura, Kagawa and Kaneko published in the SID DIGEST 2002 shows an LCD realising an sRGB color space. The necessary color conversion works on separated chromatic and achromatic components of an RGB input signal.

US6,278,496 shows a gamma correction for e.g. an LCD, wherein an image data processing apparatus comprises a contrast control circuit, a brightness control circuit, a gamma correction circuit and a D/A converter. This document is silent on color spaces.

A need is made to realize such a sRGB color space with the LCD.

Three requirements should be fulfilled to realize the sRGB color space with the LCD. First, the display luminance level with respect to the maximum input gray level should be established to be 80cd/m$^2$. Second, the gamma curve expressing the luminance characteristic of the input gray level should agree to the gamma 2.2 curve. Third, the display model offset with respect to the RGB colors should be established to be zero.

It is required for the LCD to realize such a sRGB color space.

## SUMMARY OF THE INVENTION

It is a motivation of the present invention to provide a liquid crystal display which realizes a sRGB color space, as defined in the appended claims.

## BRIEF DESCRIPTION OF THE DRAWINGS

The present invention will become more apparent by describing embodiments thereof in detail with reference to the accompanying drawings in which:

Fig. 1 is a block diagram of an LCD according to an embodiment of the present invention;
Fig. 2A is an exemplary graph illustrating luminance of an LCD as function of gray;
Fig. 2B shows an exemplary graph illustrating gamma curves of an LCD including an original gamma curve and a gamma 2.2 curve for sRGB color space;
Fig. 3 is a detailed block diagram of the luminance controller and the gamma converter shown in Fig. 1;
Fig. 4 is a graph showing a gamma 2.2 curve and an original gamma curve for illustrating the conversion of the gamma curve at the gamma converter shown in Fig. 3;
Figs. 5 and 6 are block diagrams of an LCD according to other embodiments of the present invention;
Fig. 7 is a graph illustrating the gray difference between input (original) image data and corresponding output (target) image data as function of the gray of the input image data in an LCD according to an embodiment of the present invention;
Fig. 8 is a flowchart illustrating an exemplary gamma conversion process by way of mathematical operation in an LCD according to an embodiment of the present invention; and
Fig. 9 illustrates a method of driving an LCD in a sRGB color space according to an embodiment of the present invention.

## DETAILED DESCRIPTION OF EMBODIMENTS

The present invention now will be described more fully hereinafter with reference to the accompanying drawings, in which preferred embodiments of the inventions are shown.

In the drawings, the thickness of layers and regions are exaggerated for clarity. Like numerals refer to like elements throughout. It will be understood that when an element such as a layer, region or substrate is referred to as being "on" another element, it can be directly on the other element or intervening elements may also be present. In contrast, when an element is referred to as being "directly on" another element, there are no intervening elements present.

Now, liquid crystal displays and driving methods thereof according to embodiments of the present invention will be described with reference to the accompanying drawings.

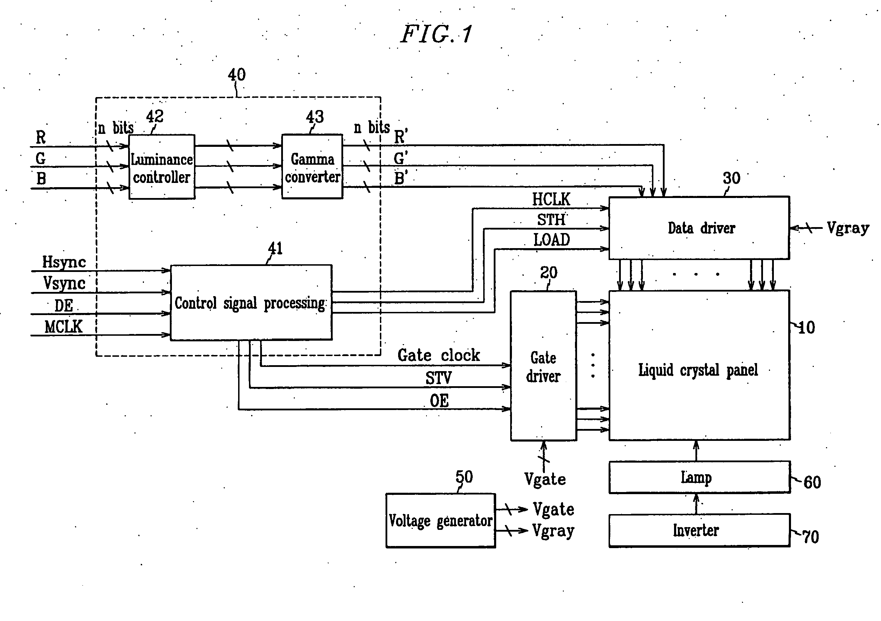

Fig. 1 is a block diagram of an LCD according to an embodiment of the present invention.

As shown in Fig. 1, an LCD according to an embodiment of the present invention includes a liquid crystal panel assembly 10, a gate driver 20, a data driver 30, a signal controller 40, a voltage generator 50, a lamp 60, and an inverter 70.

The liquid crystal panel assembly 10 includes a plurality of gate lines (not shown) extending in a transverse direction and transmitting gate voltages, a plurality of data lines (not shown) extending in a longitudinal direction and transmitting data voltages, and a plurality of pixels (not shown) connected to the gate lines and the data lines and arranged in a matrix. Each pixel includes a liquid crystal capacitor (not shown) and a switching element such as a thin film transistor (TFT) selectively transmitting the data voltages to the liquid crystal capacitor in response to the gate voltages.

The signal controller 40 receives image data RGB from an external graphic source (not shown) together with input control signals such as synchronization signals Hsync and Vsync, a data enable signal DE, and a clock signal MCLK for displaying the image data RGB. The signal controller 40 performs luminance control and gamma correction on the image data RGB to obtain corrected image data R'G'B', and outputs the corrected image data R'G'B' to the data driver 30. Furthermore, the signal controller 40 generates control signals such as a horizontal clock signal HCLK, a horizontal synchronization start signal STH, a load signal LOAD, a gate clock signal Gate clock, a vertical synchronization start signal STV, and an output enable signal OE for controlling the display operations of the gate driver 20 and the data driver 30, and outputs them to the relevant drivers 20 and 30.

The signal controller 40 includes a control signal processing block 41 and a data processing block including a luminance controller 42, and the gamma converter 43.

The control signal processing block 41 generates the control signals HCLK, STH, LOAD, Gate clock, STV and OE based on the synchronization signals Hsync and Vsync, the data enable signal DE, and the clock signal MCLK.

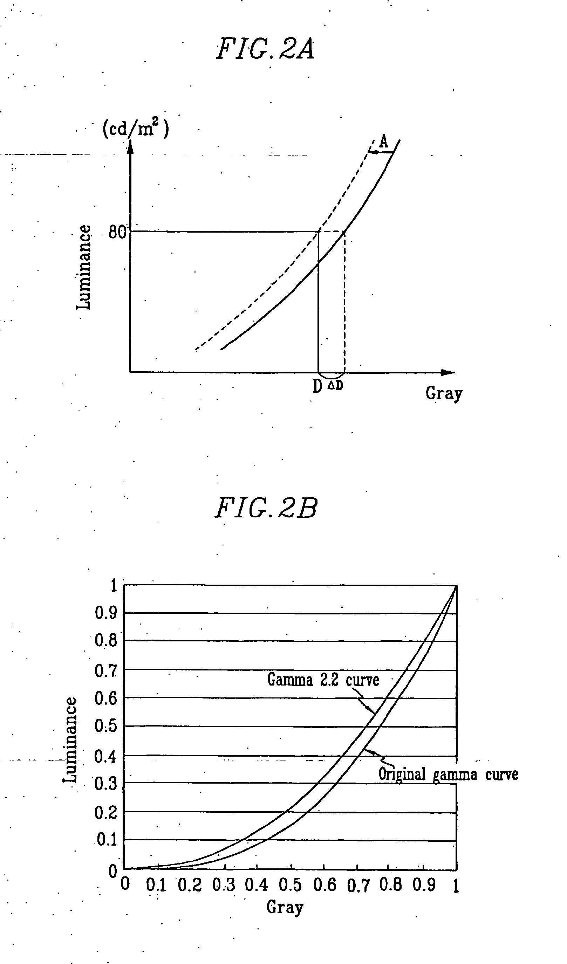

The luminance controller 42 controls the luminance of the image data RGB such that the luminance represented by a predetermined gray value (or data value) of the image data RGB be about 80 cd/m$^2$. The luminance control of the luminance controller 42 is described with reference to Fig. 2A, which is an exemplary graph illustrating luminance of an LCD as function of gray.

As shown from a solid curve in Fig. 2A, it is assumed that the luminance represented by a predetermined gray D is smaller than 80 cd/m$^2$, while the gray D+ΔD represent the luminance of 80 cd/m$^2$. The luminance controller 42 performs the luminance control by adding the value ΔD into input image data such that the luminance represented by the gray D of the predetermined input image data reach 80 cd/m$^2$. Therefore, the luminance control moves the solid luminance curve in a direction A to a dotted luminance curve. The predetermined gray D is preferably a maximum gray.

The gamma converter 43 converts a gamma characteristic of the image data from the luminance controller 42 such that it is adapted to a gamma 2.2 curve, and it outputs the converted image data R'G'B' to the data driver 30. The gamma converter 42 may perform the gamma conversion by way of a look-up table (LUT) or a mathematical operation realized on an application specific integrated circuit (ASIC). The configuration shown in Fig. 1 is obtained when using a look-up table. In this case, the look-up table includes a mapping from the original (input) image data RGB to the converted (output) image data R'G'B'. The gamma converter 42 retrieves a converted data corresponding to an input image data from the look-up table, and it output the converted image data. Although Fig. 1 shows that the bit number (n bits) of the converted image data R'G'B' is equal to the bit number (n bits) of the original image data RGB, the bit number of the converted image data RGB may be larger than the bit number of the original image data RGB in order to enhance the precision of the gamma conversion.

Fig. 2B shows an exemplary graph illustrating gamma curves of an LCD including an original gamma curve and a gamma 2.2 curve for a standard RGB (sRGB) color space. In the figure, a horizontal axis indicates a normalized input gray level while a vertical axis indicates a normalized luminance.

The data driver 30 receives and stores the converted image data R'G'B' from the gamma converter 43 of the signal controller 40 in synchronization with the control signals HCLK and STH. The data driver 30 receives a plurality of gray voltages Vgray, which are analog voltages to be actually applied to the liquid crystal panel assembly 10, from the voltage generator 50. The data driver 30 selects the gray voltages Vgray corresponding to the image data R'G'B' for the respective pixels, and outputs the selected gray voltages as the data voltages to the liquid crystal panel assembly 10 in response to the load signal LOAD.

The gate driver 20 receives the gate clock signal Gate clock, the output enable signal OE, and the vertical synchronization start signal STV from the signal controller 40, and it also receives gate voltages Vgate from the voltage generator 50. The gate driver 20 sequentially outputs the gate voltages for selecting the gate lines on the liquid crystal panel assembly 10 in accordance with the output enable signal OE and the gate clock signal Gate clock, thereby sequentially scanning the gate lines on the liquid crystal panel assembly 10.

The lamp 60 and the inverter 70 form a backlight for the liquid crystal panel assembly 10, and the inverter 70 controls the light emission of the lamp 60. In this embodiment, it is established that the inverter 70 controls the lamp 60 with a luminance of 80cd/m$^2$ or more to fulfill the luminance requirement of the sRGB color space.

When a gate line is selected by the gate voltages Vgate, the pixels connected to the gate line become in a write-enable state to be applied with the data voltages through the data lines. The pixels display predetermined luminance levels corresponding to the data voltages and a desired image is displayed on an entire screen in such a way.

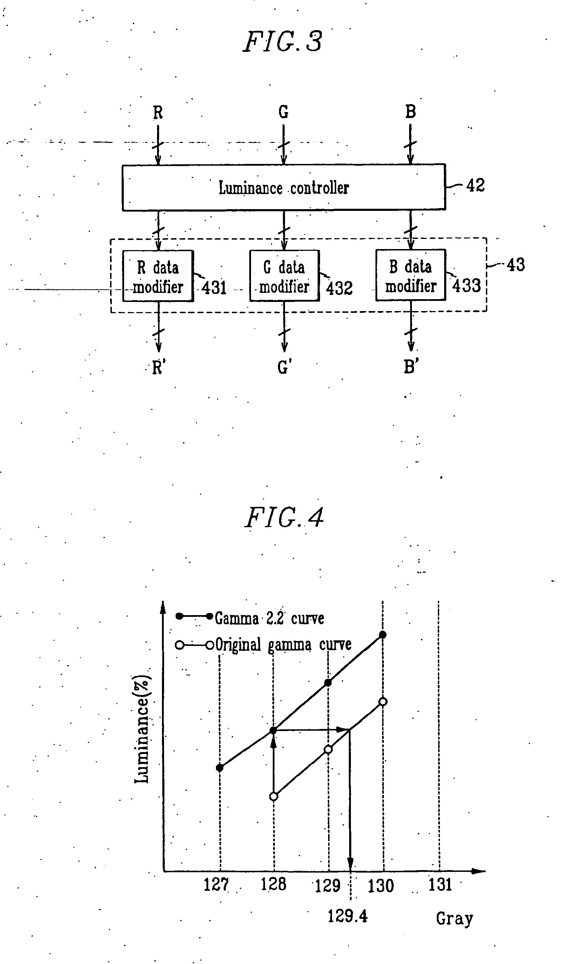

The operation of the gamma converter 43 will be now described more in detail with reference to Figs. 3 and 4.

Fig. 3 is a detailed block diagram of the luminance controller 42 and the gamma converter 43 shown in Fig. 1, and Fig. 4 is a graph showing a gamma 2.2 curve and an original gamma curve for illustrating the conversion of the gamma curve at the gamma converter 43 shown in Fig. 3.

As shown in Fig. 3, the gamma converter 43 includes an R data modifier 431, a G data modifier 432, and a B data modifier 433. The data modifiers 431-433 perform the conversion of the gamma characteristics in relation to the respective RGB colors.

More specifically, each data modifier 431-433 maps an input image data representing a luminance level on the gamma 2.2 curve into an output image data representing the same luminance level on the original gamma curve. As shown in Fig. 4, it is assumed that the gray level of the input image data is 128. The luminance of the 128-th gray level on the original gamma curve is different from the luminance of the 128-th gray level on the gamma 2.2 curve. Instead, the 129.4-th gray level on the original gamma curve represents the same luminance as the 128-th gray level on the gamma 2.2 curve. Each data modifier 431-433 maps the input image data with the 128-th gray level into the output image data with the 129.4-th gray level. For this purpose, each data modifier 431-433 includes a look-up table including a map between gray levels on the gamma 2.2 curve and gray levels on the original gamma curve, which represent equal luminance. The look-up tables for the data modifiers 431-433 may be implemented in respective non-volatile memories such as ROM (read only memory) or implemented in one ROM. In order to enhance the precision of the gamma conversion, the bit number of the output image data is larger than that of the input image data such that decimals under the decimal point of the gray levels as shown in Fig. 4 can be expressed.

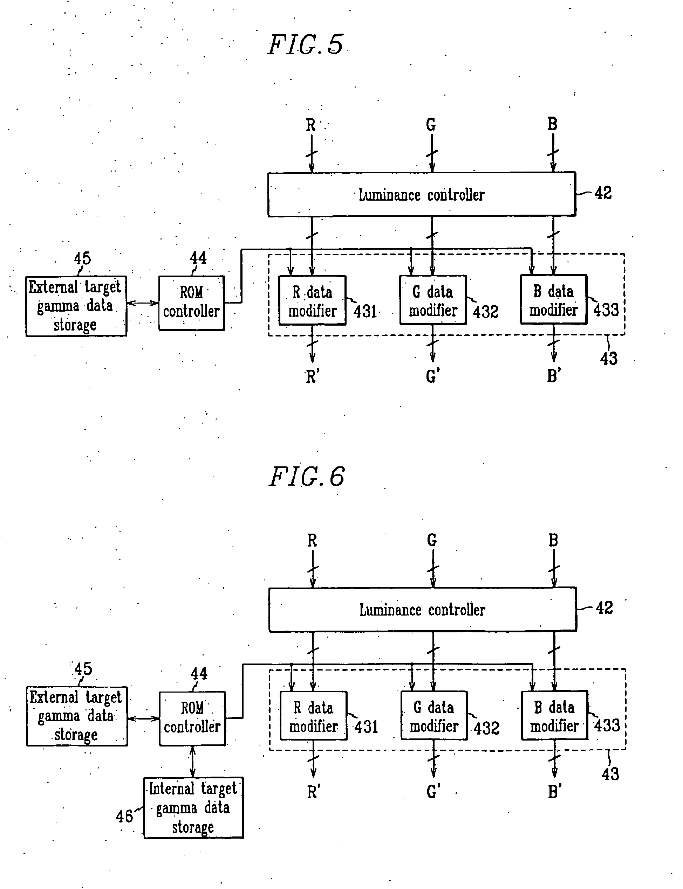

Figs. 5 and 6 are block diagrams of an LCD according to other embodiments of the present invention.

The LCD shown in Fig. 5 further includes a ROM controller 44 and an external target image data storage 45 in addition to a gamma converter 43. The gamma converter 43 includes R, G and B data modifiers 431-433, each including a volatile memory such as a random access memory (RAM).

The external target image data storage 45 stores a look-up table including a map between gray levels on the gamma 2.2 curve and gray levels on the original gamma curve for each color, which represent equal luminance. The ROM controller 44 loads the look-up table in the storage 45 into the R, G and B data modifiers 431-433. Since the other operations are similar to those shown in Fig. 3, the description thereof is omitted here.

Since the look-up table is stored in the external storage 45, this embodiment easily copes with the alteration of the panel assembly 10 without changing the gamma converter 43.

The LCD shown in Fig. 6 further includes an internal target image data storage 46 as well as a ROM controller 44, an external target image data storage 45 in addition to a gamma converter 43 as compared with the LCD shown in Fig. 5. The gamma converter 43 also includes R, G and B data modifiers 431-433, each including a volatile memory such as a random access memory (RAM).

Like the external target image data storage 45, the internal target image data storage 46 stores a look-up table including the above-described map. The ROM controller 44 loads the look-up table stored in the external storage 45 or in the internal storage 46 into the R, G and B data modifiers 431-433. Other operations are similar to those shown in Fig. 3, and hence, description thereof will be omitted here.

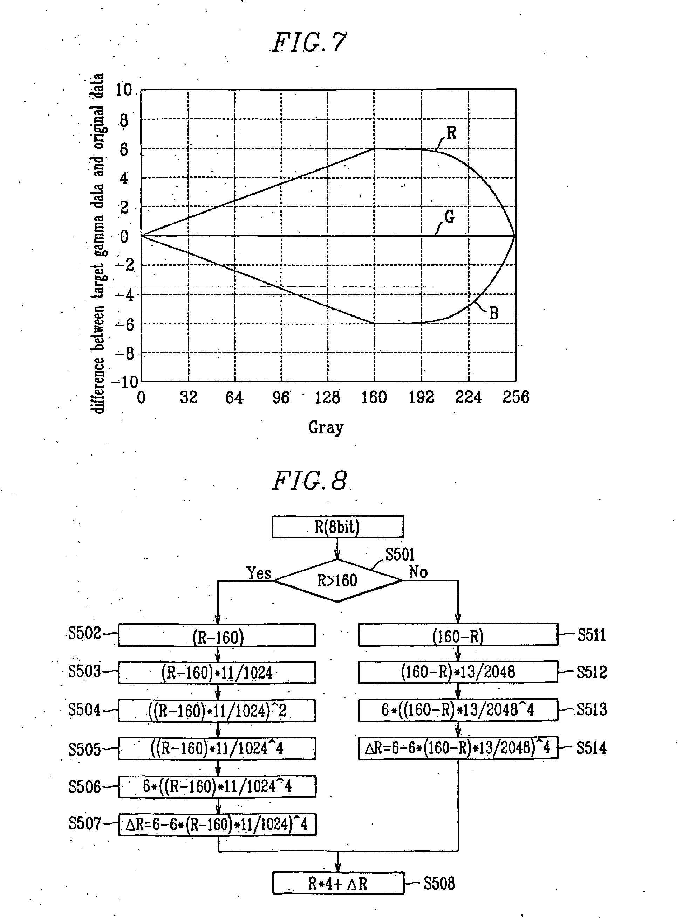

Now, gamma conversion by way of a mathematical operation according to an embodiment of the present invention will be described with reference to Figs. 7 and 8.

Fig. 7 is a graph illustrating the gray difference between input (original) image data and corresponding output (target) image data as function of the gray of the input image data in an LCD according to an embodiment of the present invention, and Fig. 8 is a flowchart illustrating an exemplary gamma conversion process by way of mathematical operation in an LCD according to an embodiment of the present invention.

It is assumed that the image data RGB are 8 bit signals capable of representing 256 grays.

As shown in Fig. 7, there is no gray difference between the target image data and the original image data for green image data G, while curves illustrating the gray difference between the target image data and the original image data for red and blue image data R and B change their shape near the gray level of 160. The gray difference $\Delta R$ and $\Delta B$ between the original data and the target data for red and blue image data R and B can be approximately expressed by:

$$\Delta R = 6 - \frac{6 \times (160 - R)}{160} \quad \text{if} \quad R < 160, \quad \text{and}$$
$$6 - \frac{6 \times (R - 160)^4}{(255 - 160)^4} \quad \text{if} \quad R \geq 160; \quad \text{and} \tag{1}$$

$$\Delta B = -6 + \frac{6 \times (160 - B)}{160} \quad \text{if} \quad B < 160, \quad \text{and}$$
$$-6 + \frac{6 \times (B - 160)^4}{(255 - 160)^4} \quad \text{if} \quad B \geq 160, \tag{2}$$

where R and B are the grays of the original data for red and blue image data, respectively.

First, as shown in Fig. 8, when an 8 bit red image data are input, it is determined whether the gray R of the input data is larger than a critical value of "160" (S501).

When the input gray R is larger than the critical value, the critical value is subtracted from the input gray (S502). Then, the resultant value (R-160) may be multiplied by 1/(255-160). However, since 1/(255-160) is roughly approximated to $11/1024 (=2^{10})$, for the purpose of simplification, (R-160) is multiplied by 11 and the lower 10 bits are rounded off (S503). Thereafter, $(R-160) \times 11/1024$ may be squared twice in a sequential manner. These operations can be made by way of a pipeline on ASIC (S504, S505). The resultant value of $((R-160) \times 11/1024)^4$ is multiplied by 6 (S506) and the resultant value of $6 \times (((R-160) \times 11/1024)^4)$ is subtracted from 6, thereby obtaining the value of $\Delta R$ in accordance with Relation 1 (S507).

When the input gray R is smaller than the critical value in the step 501, the input gray R are subtracted from the critical value (S511). Then, the resultant value (160-R) may be multiplied by 1/160. However, since 1/160 is roughly approximated to $13/2048 (=2^{11})$, (160-R) is multiplied by 13 and then the lower 11 bits are rounded off (S512). Thereafter, $(160-R) \times 13/2048$ is multiplied by 6 (S513). The resultant value of $((160-R) \times 13/2048) \times 6$ from the step S513 is subtracted from 6, thereby obtaining the value of $\Delta R$ in accordance with Relation 1 (S514).

In order to get 10 bit output data from $\Delta R$ obtained at the step S507 or S514, the 8 bit input data is multiplied by "4" to be converted into 10 bit data and is added to the calculated value $\Delta R$ (S508).

Similarly, blue output image data B' can be calculated based on Relation 2.

The gamma conversion by way of a mathematical operation does not require a memory for storing a look-up table. The storage capacity of ROM or RAM required for storing the look-up table is considerably great. For instance, the storage capacity of 6144 (3×256×8) bits are required for 8 bit image data. Accordingly, the gamma conversion according to this embodiment removes a large amount of storage capacity and reduces the power consumption due to the memory.

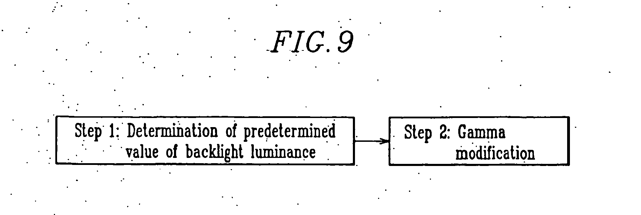

A method of driving an LCD according to an embodiment of the present invention will be now described with reference to Fig. 9.

Fig. 9 illustrates a method of driving an LCD in a sRGB color space according to an embodiment of the present invention.

As shown in Fig. 9, a method of driving an LCD including a backlight unit according to an embodiment of the present invention includes a first step for controlling the backlight and a second step for gamma correction. The backlight unit includes at least one lamp and an inverter for controlling the lamp.

In the first step, the inverter is controlled such that the lamp emits light with a luminance equal to or larger than 80 cd/m$^2$, which is required for the sRGB color space.

The second step includes the substeps of luminance control and gamma conversion as described above. In detail, the luminance of the image data is controlled such that the luminance level represented by a predetermined gray level of image data be 80cd/m$^2$, and the gamma characteristic of the input image data are converted to be adapted to the gamma 2.2 curve.

As described above, the luminance of the backlight is determined to be a specific value larger than 80cd/m$^2$, and the luminance of the image data is controlled such that the luminance of the input image data satisfies 80cd/m$^2$ at the specific image data value. In this way, the sRGB mode can be realized with the LCD, and the display quality of the LCD can be improved.

While the present invention has been described in detail with reference to the embodiments, those skilled in the art will appreciate that various modifications and substitutions can be made thereto without departing from the scope of the present invention as set forth in the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A liquid crystal display for realizing an sRGB color space, the liquid crystal display comprising:

> a signal controller (40) including:
> a luminance controller (42) for outputting image data resulting from processing input image data with respective grays such that the luminance represented by the maximum gray level of the input image data is 80 cd/m$^2$; and
> a gamma converter (43) for outputting output image data have gamma characteristic adapted to a gamma 2.2 curve based on the image data from the luminance controller (42);
> a data driver (30) for selecting and outputting gray voltages corresponding to the output image data from the gamma converter (43) (40); and
> an inverter (70) for controlling a lamp (60) such that the lamp emits light with luminance equal to or larger than 80 cd/m$^2$, wherein the processing of the luminance controller (42) includes addition of a predetermined data value to the input image data such that the luminance represented by the maximum gray level of the input image data is 80cd/m$^2$, wherein the gamma converter (43) comprises an R data modifier (431), a G data modifier (432) and a B data modifier (433) for performing the gamma conversion of the image data from the luminance controller (42) for respective red, green and blue colors, and each of the data modifiers maps the image data from the luminance controller (42) into output image data having a gamma characteristic adapted to the gamma 2.2 curve, the bit number of the output image data being larger than that of the input image data.

2. The liquid crystal display of claim 1, wherein the data modifiers (431, 432, 433) include a nonvolatile memory.

## Patentansprüche

1. Eine Flüssigkristallanzeige zur Erzeugung eines sRGB-Farbraums, wobei die Flüssigkristallanzeige Folgendes umfasst:

> eine Signalsteuerung (40), die Folgendes einschließt:

eine Leuchtdichtensteuerung (42) zur Ausgabe von Bilddaten, die aus der Verarbeitung von Eingabe-Bilddaten mit entsprechenden Grautönen resultieren, so dass die Leuchtdichte, die durch die maximale Graustufe der Eingabe-Bilddaten dargestellt wird, 80 cd/m$^2$ beträgt, und

einen Gammakonverter (43) zur Ausgabe von Ausgabe-Bilddaten mit Gamma-Eigenschaft, die an eine gamma 2.2-Kurve angepasst ist, basierend auf den Bilddaten von der Leuchtdichtensteuerung (42),

einen Datentreiber (30) zur Auswahl und Ausgabe von Grauspannungen, die den Ausgabe-Bilddaten vom Gammakonverter (43) (40) entsprechen; und

einen Inverter (70) zur Steuerung einer Lampe (60), so dass die Lampe mit einer Leuchtdichte gleich oder höher als 80 cd/m$^2$ emittiert, wobei die Verarbeitung der Leuchtdichtensteuerung (42) die Addition eines vordefinierten Datenwerts zu den Eingabe-Bilddaten einschließt, so dass die Leuchtdichte, die durch die maximale Graustufe der Eingabe-Bilddaten dargestellt wird, 80 cd/m$^2$ beträgt, wobei der Gammakonverter (43) einen R-Datenmodifikator (431), einen G-Datenmodifikator (432) und einen B-Datenmodifikator (433) umfasst, um die Gamma-Umwandlung der Bilddaten von der Leuchtdichtensteuerung (42) für entsprechende rote, grüne und blaue Farben durchzuführen, und wobei jeder der Datenmodifikatoren die Bilddaten von der Leuchtdichtensteuerung (42) auf Ausgabe-Bilddaten abbildet, die eine Gamma-Eigenschaft haben, welche an die gamma 2.2-Kurve angepasst ist, wobei die Bitzahl der Ausgabe-Bilddaten höher ist als diejenige der Eingabe-Bilddaten.

**2.** Die Flüssigkristallanzeige gemäß Anspruch 1, wobei die Datenmodifikatoren (431, 432, 433) einen nicht flüchtigen Speicher einschließen.

## Revendications

**1.** Afficheur à cristaux liquides pour réaliser un espace de couleurs sRGB, l'afficheur à cristaux liquides comprenant :

un contrôleur de signaux (40) comprenant :

un contrôleur de luminance (42) pour délivrer en sortie des données d'image provenant d'un traitement de données d'image d'entrée avec des gris respectif de sorte que la luminance représentée par le niveau maximum de gris des données d'image d'entrée soit de 80 cd/m$^2$; et

un convertisseur gamma (43) pour délivrer en sortie des données d'image de sortie ayant une caractéristique gamma adaptée à une courbe 2.2 gamma sur la base des données d'image provenant du contrôleur de luminance (42) ;

un pilote de données (30) pour sélectionner et délivrer en sortie des tensions de gris correspondant aux données d'image de sortie provenant du convertisseur gamma (43) (40) ; et

un onduleur (70) pour commander une lampe (60) de sorte que la lampe émette de la lumière avec une luminance égale ou supérieure à 80 cd/m$^2$, dans lequel le traitement du contrôleur de luminance (42) comprend l'addition d'une valeur de données prédéterminée aux données d'image d'entrée de sorte que la luminance représentée par le niveau maximum de gris des données d'image d'entrée soit de 80 cd/m$^2$, dans lequel le convertisseur gamma (43) comprend un modificateur de données R (431), un modificateur de données G (432) et un modificateur de données B (433) pour effectuer la conversion gamma des données d'image provenant du contrôleur de luminance (42) pour des couleurs respectives rouge, verte et bleue, et chacun des modificateurs de données réalise une correspondance entre les données d'image provenant du contrôleur de luminance (42) et des données d'image de sortie ayant une caractéristique gamma adaptée à la courbe 2.2 gamma, le nombre de bits des données d'image de sortie étant supérieur à celui des données d'image d'entrée.

**2.** Afficheur à cristaux liquides selon la revendication 1, dans lequel les modificateurs de données (431, 432, 433) comprennent une mémoire non-volatile.

## FIG. 2A

## FIG. 2B

## FIG.1

EP 1 420 385 B1

## FIG.3

R        G        B

```
┌─────────────────────────────────────┐
│        Luminance controller          │── 42
└─────────────────────────────────────┘
```

```
┌ ─ ─ ─ ─ ─ ─ ─ ─ ─ ─ ─ ─ ─ ─ ─ ─ ─ ─ ┐
│ ┌─────────┐   ┌─────────┐   ┌─────────┐ │── 43
│ │ R data  │   │ G data  │   │ B data  │ │
│ │ modifier│431│ modifier│432│ modifier│433│
│ └─────────┘   └─────────┘   └─────────┘ │
└ ─ ─ ─ ─ ─ ─ ─ ─ ─ ─ ─ ─ ─ ─ ─ ─ ─ ─ ┘
```

R'        G'        B'

## FIG.4

● ─── ● Gamma 2.2 curve

○ ─── ○ Original gamma curve

Luminance(%)

127    128    129    130    131

129.4

Gray

## FIG.5

R         G         B

Luminance controller     42

| 45 | 44 | | | |
|---|---|---|---|---|
| External target gamma data storage | ROM controller | R data modifier  431 | G data modifier  432 | B data modifier  433 |

43

R'         G'         B'

## FIG.6

R         G         B

Luminance controller     42

| 45 | 44 | | | |
|---|---|---|---|---|
| External target gamma data storage | ROM controller | R data modifier  431 | G data modifier  432 | B data modifier  433 |

43

46   Internal target gamma data storage

R'         G'         B'

## FIG. 7

## FIG. 8

*FIG.9*

| Step 1: Determination of predetermined value of backlight luminance | → | Step 2: Gamma modification |
|---|---|---|

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002130830 A
- US 2002154088 A
- US 6278496 B